# EUROPÄISCHE PATENTANMELDUNG

(11) **EP 1 995 656 A1**
(43) Veröffentlichungstag der Anmeldung: **26.11.2008**
(21) Anmeldenummer: 07010197.7
(22) Anmeldetag: 23.05.2007
(51) Int. Cl.: G05F 1/67

(54) **Verfahren zur Leistungsanpassung**

(71) Anmelder: SMA Solar Technology AG, 34266 Niestetal (DE)
(72) Erfinder: Leonhardt, Gerald Dr., 34125 Kassel (DE); Kühnel, Christian, 34121 Kassel (DE); Laschinski, Joachim, 34134 Kassel (DE); Bremicker, Sven, 36211 Alheim (DE); Arend, Oliver, 34253 Lehfelden (DE); Bettenwort, Gerd Dr., 34119 Kassel (DE); Reichenbächer, Wolfgang, 34355 Staufenberg (DE)
(74) Vertreter: Walther, Walther & Hinz GbR

(57) **Zusammenfassung**

Ein Verfahren zur Leistungsanpassung eines elektrische Energie erzeugenden Systems, bei dem durch Veränderung des Arbeitspunktes in einem Anpassungsvorgang und Vergleich der daraus sich ändernden Leistung des Systems ein Arbeitspunkt hoher Leistung eingestellt wird, soll sowohl für stationäre Kennlinien als auch für instationäre Generatorkennlinien geeignet und in einfacher Weise durchzuführen sein, so dass stets ein optimaler Arbeitspunkt selbst dann eingestellt wird, wenn äußere Störeinflüsse gegeben sind. Dies wird dadurch erreicht, dass ein oder mehrere zusätzliche Kontrollschritte oder Kontrollzyklen durchgeführt werden, um ein während des Anpassungsvorgangs sich durch äußere Einflüsse sich ändernder Leistungspunkt so nachzuführen, dass ein Arbeitspunkt noch höherer Leistung eingestellt wird.

## Beschreibung

Die Erfindung betrifft ein Verfahren zur Leistungsanpassung eines elektrische Energie erzeugenden Systems, bei dem durch Veränderung des Arbeitspunktes in einem Anpassungsvorgang und Vergleich der daraus sich ändernden Leistung des Systems ein Arbeitspunkt hoher Leistung eingestellt wird.

Photovoltaik-Generatoren bestehen aus Photovoltaikzellen bzw. sogenannten Solarzellen, die aufgrund ihrer Halbleitereigenschaften besondere Generatorkennlinien aufweisen. Die maximal mögliche abgegebene Leistung hängt stark vom Arbeitspunkt der Generatorkennlinie ab. Da wertvolle und teure elektrische Energie bei falscher Anpassung verloren geht, versucht man den Arbeitspunkt durch Anpassungsverfahren optimal einzustellen. Der Arbeitspunkt hängt nämlich nicht nur von der elektrischen Belastung, sondern auch von der auf die Generatorfläche auftreffende Sonneneinstrahlung ab, die nicht konstant ist.

Ein Verfahren zur Leistungsoptimierung der genannten Art ist zum Beispiel aus der US 6,281,485 B1 bekannt. Hierbei wird ein Wechselrichter so angesteuert, dass ein Anpassungszyklus erfolgt, so dass sich ein Maximum an elektrischer Leistung ergeben soll. Zur Einstellung des Arbeitspunktes werden Strom und Spannung während einer elektrischen Belastung beobachtet.

In der Praxis besteht jedoch das Problem, dass sich durch ändernde meteorologische Einflüsse die Randbedingungen relativ schnell ändern können. Dadurch kann es aber bei dem genannten Verfahren vorkommen, dass es nicht schnell genug die Störeinflüsse erfassen kann und es so zur Einstellung eines weniger optimalen Arbeitspunktes kommen kann.

Liegen zu keiner Zeit stationäre Randbedingungen vor, sind Fehlanpassungen bis hin zur Einstellung des Leerlauf- oder Kurzschlusspunktes möglich, so dass der Leistungsfluss vollkommen zusammenbricht.

Ein anderes Verfahren zur Steuerung eines zwischen einer alternativen Energiequelle und einem Verbraucher angeordneten Anpassungsgerätes ist in der DE 40 19 710 A1 gezeigt und beschrieben. Durch eine Stromspannungsmessung wird zunächst die von einer Energiequelle abgegebene Ist-Leistung ermittelt und als Ausgangsleistung festgesetzt. Anschließend wird mit einem vorgegebenen Spannungswert erhöhter Ausgangsspannung der Energiequelle die weitere von der Energiequelle bereitgestellte Ist-Leistung ermittelt und mit der vorher festgelegten Ausgangsleistung verglichen. Dies wird mit schrittweise um vorgegebene Spannungswerte erhöhten Ausgangsspannungen solange wiederholt, bis eine der jeweils ermittelten Ist-Leistungen die vorher festgesetzte Ausgangsleistung übersteigt. Wenn die ermittelte Ist-Leistung die vorher festgesetzte Ausgangsleistung übersteigt, dann wird die erste festgesetzte Ausgangsspannung der Energiequelle um die vorgegebenen Spannungswerte geändert, die Anzahl der Spannungswerte auf 1 reduziert und die Ausgangsspannung der Energiequelle im Punkt maximal möglicher Leistung gehalten.

Dieses Verfahren arbeitet jedoch nur dann zuverlässig, wenn eine stationäre Generatorkennlinie vorliegt. Bei einer instationären Generatorkennlinie, zum Beispiel durch sich rasch ändernde meteorologische Einflüsse, findet dieses Verfahren den Punkt maximaler Leistung nicht.

Der Erfindung liegt die Aufgabe zugrunde, ein Verfahren anzugeben, das sowohl für stationäre Kennlinien als auch für instationäre Generatorkennlinien geeignet und in einfacher Weise durchzuführen ist, so dass stets ein optimaler Arbeitspunkt selbst dann eingestellt wird, wenn äußere Störeinflüsse vorliegen.

Diese Aufgabe wird durch ein Verfahren gelöst, das sich dadurch auszeichnet, dass ein oder mehrere zusätzliche Kontrollschritte oder Kontrollzyklen durchgeführt werden, um einen sich während des Anpassungsvorgangs durch äußere Einflüsse ändernder Leistungspunkt so nachzuführen, dass ein Arbeitspunkt noch höherer Leistung eingestellt wird.

Weitere vorteilhafte Ausgestaltungen der Erfindung sind den Unteransprüchen zu entnehmen.

Die Erfindung beruht auf dem Gedanken, durch einen oder mehrere zusätzliche Kontrollschritte bzw. Kontrollzyklen dahingehend zu überprüfen, ob ein angenommener Arbeitspunkt maximaler Leistung auch den tatsächlichen Arbeitspunkt maximaler Leistung entspricht. Die Kontrollschritte, die praktisch in den Anpassungsvorgang integriert sind, erlauben eine sehr schnelle Korrektur des Arbeitspunktes, wenn durch äußere Einflüsse die Generatorkennlinie sich während eines Anpassungszyklus geändert hat.

So kann es vorkommen, dass die auf den Photovoltaikgenerator auftreffende Sonneneinstrahlung beispielsweise durch Wolkenzugsbewegung plötzlich stark reduziert wird, so dass zu Beginn des Anpassungszyklus eine erste Generatorkennlinie mit hohem Kurzschlussstrom und am Ende des Anpassungszyklus eine Generatorkennlinie mit kleinerem Kurzschlussstrom vorliegt. Bei sehr großen Änderungen der Einstrahlung verhält sich die Leerlaufspannung analog zum Kurzschlussstrom.

Durch die Erfindung können wechselnde Störeinflüsse in einfacher Weise während des Vorgangs der Selbstanpassung berücksichtigt werden. Durch die zusätzliche Kontrolle und der zusätzlichen Korrektur kann daher ein unerwartet hoher Wirkungsgrad erreicht werden. Insofern kann auch unter meteorologischen Störeinflüssen auf relativ einfache und kostengünstige Weise der Wirkungsgrad bei konventioneller Anpassung unter bestimmten Bedingungen von etwa 96% auf 99,6% erhöht werden. Das heißt, durchdie Erfindung können 99,6% des Energieangebotes umgesetzt werden.

Durch die Erfindung ist eine Selbstanpassung des energiewandelnden Systems in seinem optimalen Betriebspunkt oder Betriebsbereich möglich, indem ein oder mehrere Kontrollschritte oder Kontrollzyklen zu einem oder mehreren Referenzpunkten oder einem oder mehreren Referenzabschnitten erfolgen. Es werden ein neuer oder mehrere neue Arbeitspunkte oder ein neuer Arbeitsabschnitt in Abhängigkeit von der Lageänderung des Referenzpunktes oder der Referenzpunkte oder des Referenzbereiches eingestellt.

Das erfindungsgemäße Verfahren erlaubt einen störungsresistenten Betrieb eines Energie wandelnden Systems in seinem optimalen Betriebspunkt oder Betriebsbereich. Der Einfluss externer Störeinflüsse auf einen Referenzarbeitspunkt wird über dessen zeitliches Verhalten erfasst, wobei der Betriebspunkt des Systems entsprechend nachgeführt wird.

Der Referenzpunkt oder die Referenzpunkte bzw. der Referenzbereich wird in zyklischen oder azyklischen Abständen dem neuen Arbeitspunkt oder den neuen Arbeitspunkten oder dem neuen Arbeitsabschnitt bei einer instationären Kennlinie nachgeführt.

Die Erfindung stellt somit ein Verfahren zur Selbstanpassung eines energiewandelnden Systems in seinem optimalen Betriebspunkt oder Betriebsbereich bereit. Ein selbstanpassendes Verfahren eines Energie wandelnden Systems dient der Aufgabe, einen Betrieb im optimalen Betriebspunkt unabhängig von äußeren Störgrößen, d.h. dauerhaft, sicherzustellen. Damit ist es in der Lage, die Energieabgabe der Quelle gegenüber anderen Methoden der Arbeitspunkteinstellung, z.B. einem Festpunktbetrieb des Systems, zu erhöhen.

Das erfindungsgemäße Verfahren findet den Punkt maximaler Leistung bei stationärer und instationärer Kennlinie sicher, was bei den aus dem Stand der Technik bekannten Verfahren nicht zutrifft.

Durch die Erfindung kann nicht nur ein optimaler Arbeitspunkt eingestellt werden, sondern auch gehalten werden. Durch die Erfindung wird zudem der Punkt maximaler Leistung auch bei dauerhaft instationärer Kennlinie gehalten. Aus dem Stand der Technik bekannte Verfahren können nur auf sich gelegentlich ändernde Kennlinien reagieren, nicht jedoch auf dauerhaft instationäre Kennlinien. Das Verfahren findet den Punkt maximaler Leistung bei stationärer und instationärer Kennlinie auch bei kleinen Leistungen. Insbesondere bei kleineren Leistungen arbeiten andere bekannte Verfahren sehr ungenau.

In einer der bevorzugten Ausgestaltung der Erfindung ist insbesondere vorgesehen, dass der Anpassungsvorgang auch im Sinne eines Anpassungszyklus durch einen oder mehrere Suchschritte verzögert wird, wobei während der Verzögerung ein oder mehrere der Kontrollschritte oder der Kontrollzyklen durchgeführt werden, so dass bei einer Leistungsänderung durch äußeren Einfluss der Arbeitspunkt entsprechend der Richtung der Leistungsänderung korrigiert oder beibehalten wird, wenn keine Leistungsänderung erfolgt. Das Verzögern des Suchschrittes oder der Suchschritte um ein, zwei oder mehrfache Zeitintervalle dient dazu, um die Leistung mehrfach zu beobachten. Liegt zwischen der ersten und letzten Beobachtung eine hinreichend kleine Leistungsdifferenz, so werden die Randbedingungen als konstant angenommen und der Suchschritt wird in die vorbestimmte Richtung ausgeführt. Ist jedoch eine signifikante Leistungsänderung beobachtbar, so wird entsprechend der Richtung der Leistungsänderung der Suchschritt entweder korrigiert oder beibehalten.

Hierdurch wird der Betriebspunkt im zeitlichen Mittel möglichst dicht an seinem Optimalpunkt gehalten.

In einer vorteilhaften Weiterbildung des erfindungsgemäßen Verfahrens ist eine Unterbrechung des Anpassungsvorgangs vorgesehen, um einen oder mehrere zurückliegende Arbeitspunkte während einem oder mehrerer Kontrollschritte oder Kontrollzyklen so einzustellen, dass ein zurückliegender Arbeitspunkt als Referenzpunkt eingestellt wird, wobei bei einer Leistungsänderung während eines Kontrollschrittes oder Kontrollzyklus der Arbeitspunkt in Richtung der Leistungsänderung eingestellt wird, so dass er korrigiert wird oder nicht korrigiert wird, wenn keine Leistungsänderung feststellbar ist. Der Vorgang der Selbstanpassung kann in einem Basisverfahren durchgeführt werden. Die Unterbrechung erlaubt einen Rücksprung an einen oder mehrere beliebige Punkte, die als ein Referenzpunkt oder als Referenzpunkte vorgesehen sind. In zyklischen oder auch in azyklischen Abständen wird das Basisverfahren unterbrochen und es werden ein oder mehrere zeitlich zurückliegende Arbeitspunkte bzw. ein Referenzpunkt oder Referenzpunkte eingestellt. Weist der Referenzpunkt bzw. die Referenzpunkte unveränderte Kennwerte auf, so werden die Randbedingungen als konstant angenommen und der Suchschritt wird in die vorbestimmte Richtung ausgeführt. Ist jedoch eine signifikante Leistungsänderung beobachtbar, so wird entsprechend der Richtung der Leistungsänderung der Suchschritt entweder korrigiert oder beibehalten. Hierdurch wird der Betriebspunkt im zeitlichen Mittel möglichst dicht an seinem Optimalpunkt gehalten.

Nach einer weiteren vorteilhaften Ausführung der Erfindung werden während eines Kontrollschrittes oder Kontrollzyklus zwei linksseitige Referenzpunkte eingestellt, die näher an einem Kurzschlusspunkt liegen als ein zuvor verlassener aktueller Arbeitspunkt. Diese Referenzpunkte bilden einen Abschnitt auf der Strom-Spannungskennlinie und sind durch nahezu gleiche Ströme gekennzeichnet.

Um einen Kontrollschritt oder Kontrollzyklus durchführen zu können, ist zweckmäßigerweise vorgesehen, das dieser durch elektrische Be- oder Entlastung des Systems geändert wird.

Von Vorteil ist es, dass in dem Anpassungsvorgang als Selbstanpassung eine erzwungene Verschiebung des Arbeitspunktes durch elektrisches Be- oder Entlasten eines Strom erzeugenden Generators erfolgt, wobei die Anpassung in Abhängigkeit eines Vergleichsergebnisses zweier oder mehrerer aufeinanderfolgender Arbeitspunkte basiert. Die gemessenen Werte können in einem digitalen Speicher gespeichert werden und durch eine Programmausführung verglichen werden, wobei stets der optimale Wert im Speicher festgehalten wird.

In einem Basisverfahren kann der Vorgang der Selbstanpassung nach einem Steigungsverfahren durchgeführt werden, was besonders günstig ist. Aufgabe eines solchen Verfahrens ist es festzustellen, ob sich der aktuelle Arbeitspunkt auf dem abfallenden Ast der Kennlinie oder auf dem ansteigenden Ast befindet. Hierzu werden aus zwei aufeinanderfolgenden Messungen die Differenzquotienten aus Leistung und Spannung gebildet und vorzeichenrichtig die Suchrichtung und die Suchweite festgelegt. Eine Korrektur durch das zusätzliche Korrekturverfahren kann einfach in das Basisverfahren integriert werden.

Es ist auch von Vorteil, wenn der Anpassungsvorgang in einem Basisverfahren nach einer Prädiktor-Korrektormethode durchgeführt wird. Die zusätzlichen Korrekturschritte können ebenfalls einfach umgesetzt werden. Grundsätzlich ist völlig gleich, welches bekannte Basisverfahren eingesetzt wird.

Grundsätzlich ist das erfindungsgemäße Verfahren für jeden Generatortyp mit einem ausgeprägten Maximum zwischen Kurschluss- und Leelaufpunkt geeignet. Besonders günstig ist eine Anwendung bei Systemen mit einem Photovoltaik-Generator wegen seiner besonderen Strom-Spannungscharakteristik.

Auch ist es zweckmäßig, das Verfahren mit Hilfe z. B. eines Wechselrichters durchzuführen, der durch einfache Be- und Entlastung um den Arbeitspunkt auf der Generatorkennlinie verschoben werden kann.

Anhand eines Ausführungsbeispiels wird die Erfindung nachstehend näher erläutert, wobei weitere vorteilhafte Weiterbildungen der Erfindung und Vorteile derselben beschrieben sind.
- Fig. 1: zeigt eine Kennliniendarstellung,
- Fig. 2: zeigt einen Vergleich einer Leistungskurve mit erzwungenen Schwingungen mit Störeinfluss mit einer Leistungskurve ohne äußeren Störeinfluss,
- Fig. 3: zeigt einen Vergleich zweier Spannungskurven, wobei eine Kurve die ideale Spannung und die andere die reale Spannung zeigt,
- Fig. 4: zeigt eine Kurvendarstellung der Leistung bei maximal abgebbarer Leistung eines Energie wandelnden Systems und eine Kurve bei Anwendung der Erfindung zum Vergleich, und
- Fig. 5: zeigt eine Kurvendarstellung der Spannung bei maximal abgebbarer Leistung des Energie wandelnden Systems nach dem Stand der Technik und eine Spannungskurve bei Anwendung der Erfindung zum Vergleich.

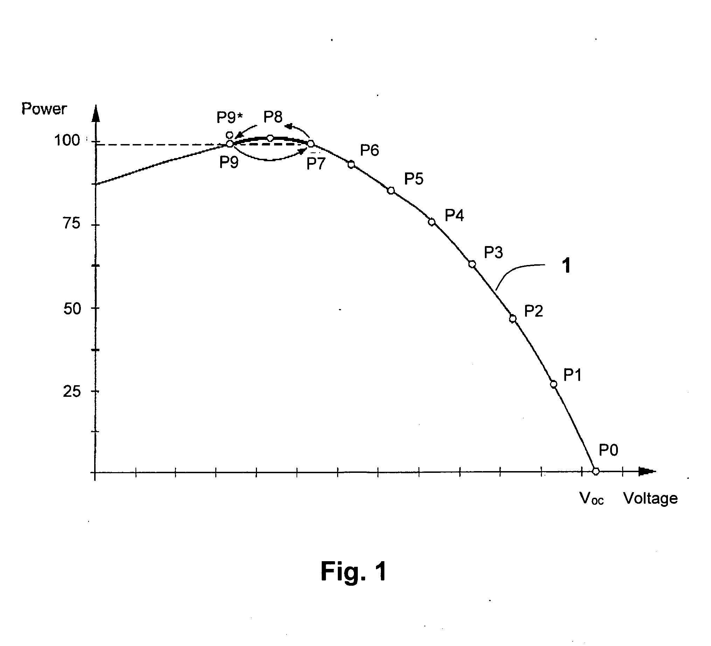

Fig. 1 zeigt eine erste Generatorkennlinie 1 eines Photovoltaiksystems mit einem Photovoltaikgenerator und einem DC/AC-Photovoltaik-Wechselrichter zur elektrischen Energieerzeugung. Zur Einstellung eines optimalen Arbeitspunktes wird ein Basisverfahren, das als Steigungsverfahren ausgeführt ist, eingesetzt.

Zur Erläuterung wird zunächst das Steigungsverfahren beschrieben, welches als Basisverfahren eingesetzt wird. Zunächst wird angenommen, dass der Generator unter stationären Verhältnissen arbeitet bzw. die auf den Generator auftreffende Strahlung während der Einstellung des Arbeitspunktes konstant ist. Der Generator ist zunächst noch nicht in Betrieb, so dass am Eingang eine Leerlaufspannung V_{oc} ansteht, wobei der Arbeitspunkt mit P₀ gekennzeichnet ist.

Unter Vorgabe eines Sollwertes, z.B. eines Spannungssollwertes, der kleiner ist als die Leerlaufspannung V_{oc}, beginnt die Leistungsabgabe. Nacheinander wird der Sollwert schrittweise abgesenkt, wodurch die Generatorleistung ansteigt. Hierbei werden die Arbeitspunkte P1 bis P7 eingestellt.

Der Arbeitspunkt wandert auf diese Weise entlang des abfallenden Astes mit einer negativen Steigung bis der Arbeitspunkt P8 erreicht wird. P8 stellt den Arbeitspunkt maximaler Generatorleistung dar.

Bei einer weiteren Verschiebung des Arbeitspunktes bzw. Erhöhung des Sollwertes sinkt jedoch die Generatorleistung. Der Arbeitspunkt P9*, der die gleiche Leistung wie P8 beinhalten würde, ist nicht möglich. Es stellt sich zwangsläufig der Punkt P9 auf dem ansteigenden Ast mit einer positiven Steigung ein, wobei der Punkt P9 eine geringere Generatorleistung liefert. Da die Generatorleistung im Punkt P9 kleiner als die Leistung im Punkt P8 ist, muss der Arbeitspunkt in Richtung des abfallenden Astes auf der Generatorkennlinie 1 verschoben werden. Der Sollwert wird also schrittweise erhöht, bis Punkt P7 auf der Kennlinie erreicht wird und damit erneut mit dem Verringern des Sollwertes begonnen werden kann. Auf diese Weise stellt sich ein Grenzzyklus um den Optimalpunkt ein.

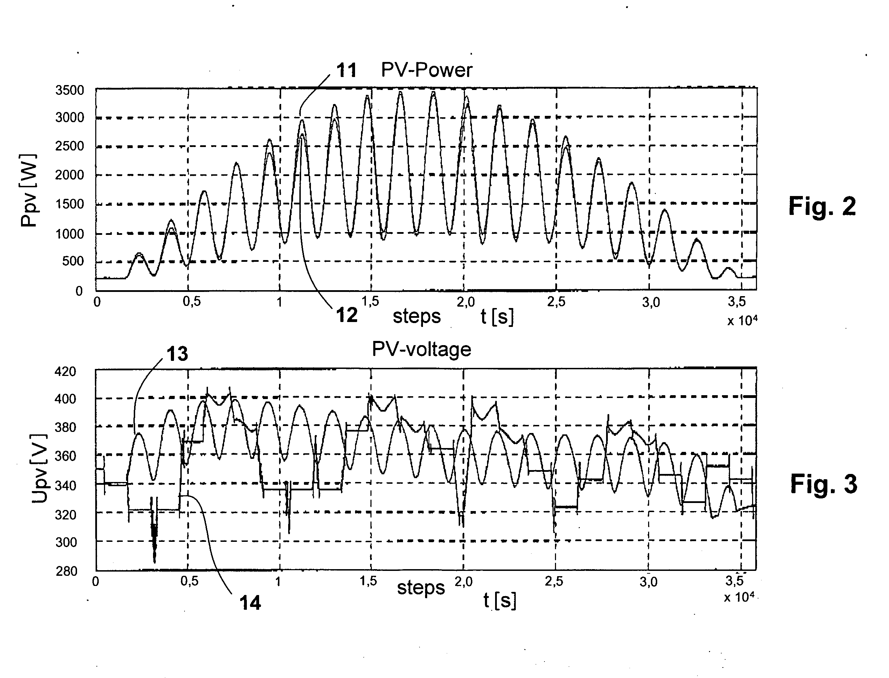

Der in Fig. 2 mit 11 gekennzeichnete Verlauf zeigt die maximal abgebbare Leistung eines energiewandelnden Systems, das unter Anwendung eines Kennlinienverfahrens als Basisverfahren eine möglichst große Leistungsabgabe ermöglichen soll.

Die in Fig. 2 mit 12 gekennzeichnete Leistungskurve, die ohne Korrekturschritte entsteht, liegt häufig unterhalb der gekennzeichneten Kurve 11, d.h. unterhalb eines möglichen optimierten Wertes. Durch die geringere Leistung ist das System praktisch verlustbehaftet. Ursache hierfür ist, dass das System eine ideale Spannung, die in Fig. 3 mit 13 gekennzeichnet ist, ohne zusätzliche Korrekturschritte nicht nachführen kann. Die real eingestellte Spannung ist mit 14 gekennzeichnet. Allen Basisverfahren ist gemeinsam, dass sie nur dann eine optimale Energieausbeute sicher stellen können, wenn stationäre Verhältnisse vorliegen.

Durch Korrekturschritte, beispielsweise während einer Unterbrechung des Basisverfahrens, ist es möglich, die Spannung so nachzuführen, dass eine maximale Leistung möglich ist.

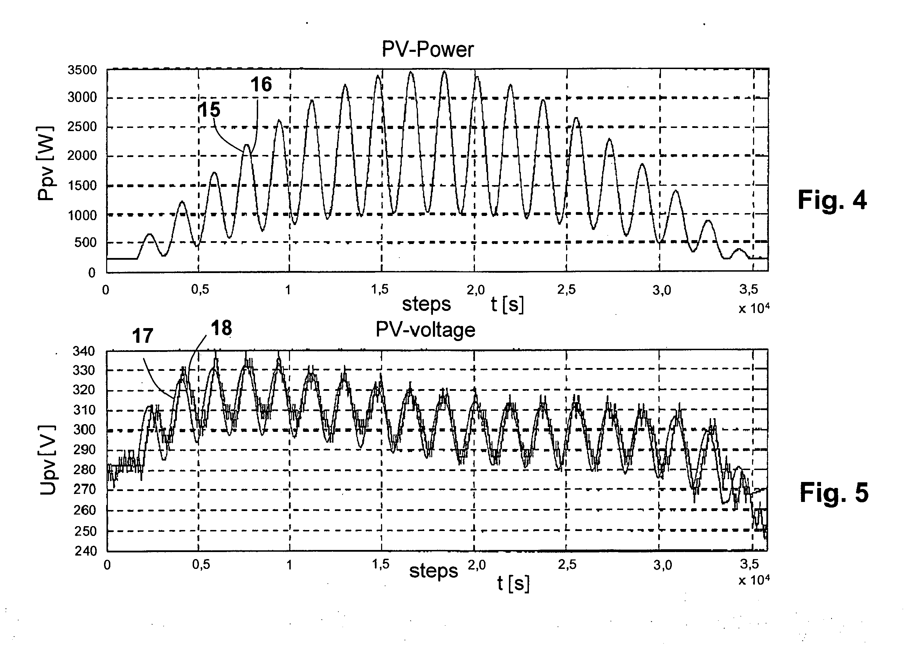

Der in Fig. 4 mit 15 gekennzeichnete Verlauf zeigt eine Leistungskurve bei maximaler Leistung eines energiewandelnden Systems. Die mit 16 gekennzeichnete Leistungskurve stellt die Leistungskurve unter Anwendung von Korrekturschritten dar und ist nahezu deckungsgleich mit der Kurve 15. Somit ist das System kaum verlustbehaftet. Dieses System kann etwa 99,6% des Energieangebotes umsetzen.

Fig. 5 veranschaulicht die zur Fig. 4 entsprechenden Spannungskurven. Das System kann die ideale Spannung, die mit 17 gekennzeichnet ist, mit guter Näherung nachführen. Die real eingestellte Spannung ist mit 18 gekennzeichnet.

Um die Korrekturschritte durchzuführen, werden mehrere bevorzugte Varianten erläutert.

Eine Variante besteht darin, einen oder mehrere Suchschritte um zwei- oder mehrfache Zeitintervalle zu verzögern, um die Leistung mehrfach beobachten zu können. Liegt zwischen der ersten und letzten Beobachtung eine hinreichend kleine Leistungsdifferenz, so werden die Randbedingungen als konstant angenommen und der Suchschritt wird in die vorbestimmte Richtung ausgeführt. Ist jedoch eine signifikante Leistungsänderung beobachtbar, so wird entsprechend der Richtung der Leistungsänderung der Suchschritt entweder korrigiert oder beibehalten. Hierdurch wird der Betriebspunkt im zeitlichen Mittel möglichst dicht an seinem Optimalpunkt gehalten.

Grundsätzlich kann neben einem Steigerungsverfahren oder Kennlinienverfahren als Basisverfahren auch ein Verfahren nach der sogenannten Prädiktor-Korrekturmethode eingesetzt werden.

Die grundsätzliche Arbeitsweise dieses Verfahrens basiert auf dem Vergleich der verschiedenen Arbeitspunkte der Generatorleistung nach einer erzwungenen Verschiebung des Arbeitspunktes durch Be- oder Entladen des Generators. In Abhängigkeit des Vergleichsergebnisses zweier aufeinander folgender Leistungsmessungen wird ein neuer Suchschritt durchgeführt. Hierzu wird ein neuer Arbeitspunkt mit der Aussicht einer Leistungssteigerung eingestellt. Kann die Leistung nicht gesteigert werden, so wird der vorausgegangene Suchschritt korrigiert und der Arbeitspunkt in die entgegengesetzte Richtung verschoben.

Eine zweite Variante besteht darin, einen einfachen oder einen wiederholten Rücksprung an einen oder mehrere beliebige Punkte als Referenzpunkt oder Referenzpunkte durchzuführen. In zyklischen oder azyklischen Abständen wird das Basisverfahren unterbrochen und ein oder mehrere zeitlich zurückliegende Arbeitspunkte als Referenzpunkte eingestellt. Weist der oder weisen die Referenzpunkte unveränderte Kennwerte auf, dann werden die Randbedingungen als konstant angenommen, wobei der Suchschritt in die vorbestimmte Richtung ausgeführt wird. Ist jedoch eine signifikante Leistungsänderung beobachtbar, so wird entsprechend der Richtung der Leistungsänderung der Suchschritt entweder korrigiert oder beibehalten. Hierdurch wird der Betriebspunkt im zeitlichen Mittel möglichst dicht an seinem Optimalpunkt gehalten.

Eine andere Variante zeichnet sich dadurch aus, dass zwei linksseitige Referenzpunkte eingestellt werden. D. h., die beiden Referenzpunkte liegen dichter am Kurzschlusspunkt als der zuvor verlassene aktuelle Arbeitspunkt. Diese Referenzpunkte bilden einen Abschnitt auf der Strom-Spannungskennlinie und sind durch nahezu gleiche Ströme gekennzeichnet.

## Patentansprüche

1. Verfahren zur Leistungsanpassung eines elektrische Energie erzeugenden Systems, bei dem durch Veränderung des Arbeitspunktes in einem Anpassungsvorgang und Vergleich der daraus sich ändernden Leistung des Systems ein Arbeitspunkt hoher Leistung eingestellt wird,
**dadurch gekennzeichnet,**
**dass** ein oder mehrere zusätzliche Kontrollschritte oder Kontrollzyklen durchgeführt werden, um einen während des Anpassungsvorgangs sich durch äußere Einflüsse ändernder Leistungspunkt so nachzuführen, dass ein Arbeitspunkt höherer Leistung eingestellt wird.

2. Verfahren nach Anspruch 1,
**dadurch gekennzeichnet,**
**dass** die ein oder mehreren zusätzlichen Kontrollabschnitte oder Kontrollzyklen zu ein oder mehreren Referenzpunkten oder Referenzabschnitten durchgeführt werden.

3. Verfahren nach Anspruch 1,
**dadurch gekennzeichnet,**
**dass** der Referenzpunkt oder die Referenzpunkte in zyklischen oder azyklischen Abständen dem neuen Arbeitspunkt oder den neuen Arbeitspunkten oder dem neuen Arbeitsabschnitt nachgeführt werden.

4. Verfahren nach Anspruch 1,
**dadurch gekennzeichnet,**
**dass** der Anpassungsvorgang durch einen oder mehrere Suchschritte verzögert wird, wobei während der Verzögerung ein oder mehrere der Kontrollschritte oder der Kontrollzyklen durchgeführt werden, so dass bei einer Leistungsänderung durch einen äußeren Einfluss der Arbeitspunkt entsprechend der Richtung der Leistungsänderung korrigiert oder beibehalten wird, wenn keine Leistungsänderung erfolgt.

5. Verfahren nach Anspruch 1,
**gekennzeichnet durch**
eine Unterbrechung des Anpassungsvorgang, um einen oder mehrere zurückliegende Arbeitspunkte während einem oder mehrerer Kontrollschritte oder Kontrollzyklen so einzustellen, dass ein zurückliegender Arbeitspunkt als Referenzpunkt eingestellt wird, wobei bei einer Leistungsänderung während eines Kontrollschrittes oder Kontrollzyklus der Arbeitspunkt in Richtung entsprechend der Leistungsänderung eingestellt wird.

6. Verfahren nach einem der vorhergehenden Ansprüche,
**dadurch gekennzeichnet,**
**dass** während eines Kontrollschrittes oder Kontrollzyklus zwei linksseitige Referenzpunkte eingestellt werden, die näher an einem Kurzschlusspunkt liegen, als ein zuvor verlassener aktueller Arbeitspunkt.

7. Verfahren nach einem der vorhergehenden Ansprüche,
**dadurch gekennzeichnet,**
**dass** ein Kontrollschritt oder ein Kontrollzyklus jeweils durch elektrische Be- oder Entlastung des Systems durchgeführt wird, so dass sich ein Referenzpunkt ändert.

8. Verfahren nach einem der vorhergehenden Ansprüche,
**dadurch gekennzeichnet,**
**dass** in dem Anpassungsvorgang eine erzwungene Verschiebung des Arbeitspunktes durch elektrisches Be- oder Entlasten eines Strom erzeugenden Generators erfolgt, wobei die Anpassung auf der Abhängigkeit eines Vergleichsergebnisses mindestens zweier aufeinanderfolgender Arbeitspunkte basiert.

9. Verfahren nach einem der vorhergehenden Ansprüche,
**dadurch gekennzeichnet,**
**dass** der Anpassungsvorgang in einem Basisverfahren nach einem Steigerungsverfahren durchgeführt wird, wobei aus zwei aufeinanderfolgenden Messungen die Differenzquotienten aus Leistung und Spannung gebildet und die Vorzeichenrichtung, die Suchrichtung und die Suchweite festgelegt wird.

10. Verfahren nach einem der vorhergehenden Ansprüche,
**dadurch gekennzeichnet,**
**dass** das System einen Photovoltaik-Generator umfasst.

11. Verfahren nach einem der vorhergehenden Ansprüche,
**gekennzeichnet durch**
eine Durchführung mittels eines Wechselrichters.

12. Verfahren nach einem der vorhergehenden Ansprüche,
**dadurch gekennzeichnet,**
**dass** der Wechselrichter ein Photovoltaik-Wechselrichter ist.

13. Photovoltaik-Wechselrichter mit Mitteln zur Durchführung des Verfahrens nach einem der vorhergehenden Ansprüche.
